# FASCICULE DE BREVET EUROPEEN

(11) **EP 3 676 144 B1**
(45) Date de publication et mention de la délivrance du brevet: **30.06.2021**
(21) Numéro de dépôt: 18819195.1
(22) Date de dépôt: 20.11.2018
(51) Int. Cl.: B60T 13/74, F16D 55/226, F16D 65/18, F16D 65/62, F16D 65/72

(54) **ETRIER DE FREIN A DISQUE DE TYPE ELECTROMECANIQUE COMPRENANT DEUX ACTIONNEURS MECANIQUES POUR COMPENSER UNE USURE INÉGALE D'UNE MÊME PLAQUETTE**
ELEKTROMECHANISCHES BREMSSATTEL MIT ZWEI AKTUATOREN, DIE FÜR UNGLEICHMÄSSIGEN BREMSBELAGVERSCHLEISS KOMPENSIERT
ELECTROMECHANICAL BRAKE CALIPER WITH TWO ACTUATORS COMPENSATING FOR UNEVEN PAD WEAR

(30) Priorité: 24.11.2017 FR 1761163
(43) Date de publication de la demande: 08.07.2020
(73) Titulaire: Foundation Brakes France, 93700 Drancy (FR)
(72) Inventeur: ESNEE, Didier, 72000 Le Mans (FR); LABARRE, Xavier, 49250 Saint Georges Du Bois (FR); MOUMANE, Mehdi, 93700 Drancy (FR)
(74) Mandataire: Brevalex
(86) Numéro de dépôt international: PCT/FR2018/052920
(87) Numéro de publication internationale: WO 2019/102133

(56) Documents cités:
- FR-A1- 3 045 757
- FR-A1- 3 045 758

## Description

### DOMAINE TECHNIQUE

L'invention se rapporte à un étrier de frein à disque de véhicule automobile de type électromécanique, c'est-à-dire équipé d'un moteur électrique entraînant des actionneurs mécaniques.

### ÉTAT DE LA TECHNIQUE ANTÉRIEURE

Dans un étrier de frein à disque de type hydraulique, tout comme dans un étrier de frein de type électromécanique, plusieurs actionneurs peuvent être prévus pour presser conjointement une même plaquette contre le disque lorsque le frein est activé.

L'invention se rapporte plus particulièrement à un étrier de frein à disque comportant un actionneur électromécanique incluant un premier et un second actionneurs mécaniques s'étendant côte à côte en vis-à-vis d'une plaquette. Le premier actionneur pousse une première portion de plaquette qui est proche d'une première extrémité de cette plaquette et le second actionneur pousse une seconde portion de plaquette qui est proche d'une seconde extrémité de cette plaquette.

Une plaquette inclut un support sur lequel est fixée une garniture de friction destinée seule à entrer en friction avec une face du disque afin de le freiner.

En pratique, il apparaît que de telles plaquettes s'usent de manière inégale, conduisant à une épaisseur de garniture qui se réduit d'une extrémité à l'autre extrémité de la plaquette.

Dans le cas d'un étrier hydraulique, l'épaisseur inégale de la plaquette est compensée par le fait que les actionneurs qui la poussent sont reliés à un même circuit hydraulique. Avec un tel circuit le fonctionnement correspond à celui d'un asservissement en efforts, qui permet par là même que les actionneurs aient des déplacements de longueurs différentes.

Concrètement, lors du freinage, la mise sous pression du circuit hydraulique, et par là même des actionneurs hydrauliques, déplace les pistons de ces actionneurs vers le disque selon des déplacements pouvant être différents. Ces déplacements s'opèrent jusqu'à ce que les pistons plaquent la totalité de la plaquette contre le disque, la pression restant la même dans le circuit et dans les actionneurs en toutes circonstances.

Il s'ensuit qu'avec un étrier hydraulique, le rattrapage d'une usure inégale de la plaquette se fait de manière naturelle.

Avec un étrier de type électromécanique, c'est un même moteur qui entraîne les actionneurs mécaniques poussant une plaquette, par l'intermédiaire d'un mécanisme de transmission pour qu'ils rapprochent les pistons du disque afin de presser la plaquette.

Si le mécanisme assure une transmission de type directe entre la rotation du moteur et la rotation des organes déplaçant les pistons, une inégalité d'épaisseur d'une plaquette ne peut pas être compensée car les déplacements et les positions de base des pistons sont nécessairement les mêmes.

Concrètement, lors du freinage avec une telle transmission de type directe, dès lors qu'un actionneur plaque contre le disque la portion de plaquette qu'il pousse, l'effort presseur exercé sur le disque va à l'encontre du couple moteur : la rotation du moteur est bloquée et le mécanisme s'immobilise en interrompant la course de l'autre piston.

L'invention a pour objet de remédier à cet inconvénient en proposant un mécanisme de transmission qui permet de rattraper une usure inégale d'une plaquette, dans un étrier de frein de type électromécanique avec des actionneurs mécaniques entraînés par un même moteur électrique. Le document FR3045757 A1 divulgue un frein à disque électromécanique conventionnel, à étrier fixe comprenant une transmission compensant une usure asymétrique (droit - gauche) de ses plaquettes.

### EXPOSÉ DE L'INVENTION

A cet effet, l'invention a pour objet un étrier de frein destiné à chevaucher un disque de freinage, qui comprend un jeu de plaquettes et un actionneur électromécanique pour presser une plaquette contre une face du disque, caractérisé en ce que l'actionneur électromécanique comprend :
- un moteur électrique entraînant un premier actionneur mécanique et un second actionneur mécanique ;
- le premier actionneur mécanique incluant une première roue entraîneuse dentée et un premier piston pour presser une première portion de la plaquette ;
- le second actionneur mécanique incluant une seconde roue entraîneuse dentée et un second piston mobile pour presser une seconde portion de la plaquette ;
- chaque actionneur convertissant une rotation de sa roue entraîneuse en une translation de son piston, le premier et le second actionneur ayant des sens de conversion inverses ;
- un module de transmission comprenant :
- une première vis sans fin et une seconde vis sans fin de même direction longitudinale et ayant des sens d'enroulement inverses tout en étant rigidement solidaires l'une de l'autre, ces première et seconde vis sans fin étant engrenées respectivement avec la première et la seconde roue entraîneuses pour les faire tourner simultanément en sens inverses ;
- des moyens d'entraînement en rotation des première et seconde vis sans fin par le moteur électrique, ces moyens formant une liaison glissière permettant à la première et la seconde vis sans fin de se déplacer en translation suivant la direction longitudinale.

Avec cette solution, lorsqu'une portion de plaquette arrive au contact du disque, la roue entraîneuse de l'actionneur correspondante s'immobilise, mais les vis sans fin continuent de tourner en se translatant pour déplacer le piston de l'actionneur associé à l'autre partie de la plaquette. Le mécanisme compense ainsi une usure inégale de la plaquette en assurant que cette plaquette soit entièrement pressée contre le disque lors du freinage.

L'invention concerne également un étrier de frein ainsi défini, dans lequel les moyens formant liaison glissière et d'entraînement en rotation des vis sans fin du module de transmission comportent :
- un arbre rotatif portant rigidement les première et seconde vis sans fin, cet arbre étant mobile en translation suivant la direction longitudinale ;
- une roue dentée fixe en translation et mise en rotation par le moteur électrique, cette roue dentée comprenant un trou traversant cannelé dans lequel une extrémité cannelée de l'arbre est engagée.

L'invention concerne également un étrier de frein ainsi défini, dans lequel les moyens formant liaison glissière et d'entraînement en rotation des vis sans fin du module de transmission comportent :
- un manchon portant rigidement les première et seconde vis sans fin, ce manchon étant mobile en translation suivant la direction longitudinale ;
- une roue dentée fixe en translation et mise en rotation par le moteur électrique ;
- un arbre rotatif qui est solidaire rigidement et dépasse de la roue dentée en comportant des cannelures externes, cet arbre rotatif s'étendant suivant la direction longitudinale en étant entouré du manchon ;
- des cannelures internes portées par le manchon avec lesquelles les cannelures externes s'engrènent par complémentarité de forme.

L'invention concerne également un étrier de frein ainsi défini, dans lequel les cannelures internes dépassent d'un moyeu lié rigidement au manchon.

L'invention concerne également un étrier de frein ainsi défini, dans lequel la première et la seconde roue entraîneuse sont à denture oblique et tournent autour d'axes parallèles l'un à l'autre et perpendiculaires à la direction longitudinale.

L'invention concerne également un étrier de frein ainsi défini, comprenant un module de réduction qui transmet la rotation du moteur au moyens d'entraînement en rotation des première et seconde vis sans fin.

L'invention concerne également un frein à disque comprenant un étrier de frein ainsi défini.

### BRÈVE DESCRIPTION DES DESSINS

- la figure 1 est une vue en coupe d'un étrier de frein à disque selon l'invention selon un plan de coupe traversant longitudinalement le premier actionneur mécanique ;
- la figure 2 est une vue en perspective de l'actionneur électromécanique selon l'invention ;
- la figure 3 est une vue de face de l'actionneur électromécanique selon l'invention ;
- la figure 4 est une vue arrière de l'actionneur électromécanique selon l'invention montrant notamment la configuration du réducteur épicycloïdal ;
- la figure 5 est une vue de dessus de l'actionneur électromécanique selon l'invention en situation de freinage avec une plaquette neuve ;
- la figure 6 est une vue de dessus de l'actionneur électromécanique selon l'invention en situation de freinage avec une plaquette présentant une usure inégale ;
- la figure 7 est une vue de détail du module d'entraînement selon une variante de l'invention ;
- la figure 8 est une vue de dessus de l'actionneur électromécanique selon une variante de l'invention en situation de freinage avec une plaquette présentant une usure inégale.

### EXPOSÉ DÉTAILLÉ DE MODES DE RÉALISATION PARTICULIERS

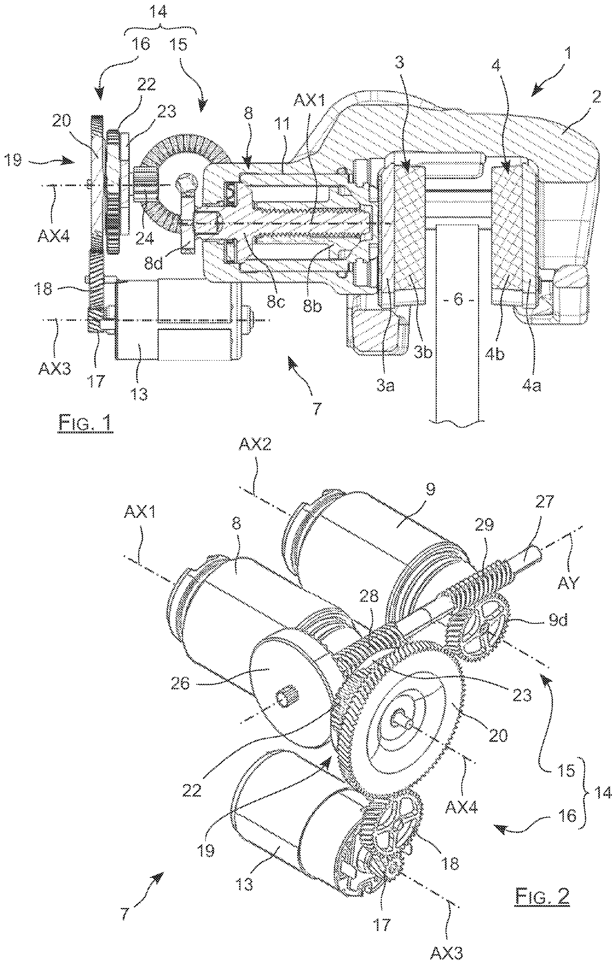

Comme visible sur la figure 1, un étrier monté flottant 1 comprend un corps d'étrier 2 qui porte un jeu de plaquettes 3 et 4 de part et d'autre d'un disque de freinage 6, et qui est équipé d'un actionneur électromécanique 7 pour presser ces plaquettes 3 et 4 contre le disque 6 en situation de freinage.

La plaquette 3 comprend un support 3a auquel est fixée une garniture 3b. De la même manière, la plaquette 4 comprend un support 4a auquel est fixée une garniture 4b.

Cet actionneur électromécanique 7 représenté en figure 2 comprend un moteur électrique 13 qui entraîne, par l'intermédiaire d'un mécanisme d'entraînement 14, deux actionneurs mécanique 8 et 9 agencés en vis-à-vis de la plaquette 3.

Cette plaquette 3 s'étend latéralement, c'est-à-dire qui s'étend dans une direction tangentielle au disque 6. Les deux actionneurs mécaniques 8 et 9 sont côte à côte le long de la plaquette 3 en s'étendant perpendiculairement à celle-ci. Le premier actionneur 8 est en regard d'une première portion de la plaquette 3 proche d'une première extrémité de cette plaquette 3 et le second actionneur mécanique 9 est en regard d'une seconde portion de la plaquette 3 proche d'une seconde extrémité de cette plaquette 3. Le premier actionneur 8 est monté dans une première cavité 11 du corps d'étrier 2 selon un axe AX1 dans une direction axiale, c'est à dire dans une direction normale au disque de freinage 6, tandis que le second actionneur 9 est monté dans une seconde cavité du corps d'étrier 2 selon un axe AX2 parallèle à AX1.

Le premier actionneur 8 comprend une partie inclue dans le corps d'étrier 2 avec un premier piston 8a qui entoure un premier écrou 8b vissé autour d'une première vis entraîneuse 8c axiale, et une partie hors du corps d'étrier 2 avec une première roue entraîneuse 8d à denture hélicoïdale, autrement dit oblique, qui est rigidement solidaire de cette première vis entraîneuse 8c.

Le premier piston 8a et le premier écrou 8b sont bloqués en rotation autour de l'axe AX1 mais mobiles en translation selon cet axe AX1 tandis que la première vis entraîneuse 8c et la première roue entraîneuse 8d sont mobiles en rotation autour de l'axe AX1 mais bloquées en translation selon ce même axe AX1.

Cet agencement convertit une rotation de la première roue entraîneuse 8d en une translation axiale du premier piston 8a selon l'axe AX1, dans un sens ou dans l'autre en fonction du sens de rotation de cette première roue entraîneuse 8d.

De manière analogue, le second actionneur 9 comporte une seconde roue entraîneuse 9d pour déplacer un second piston 9a axialement selon AX2 par l'intermédiaire d'un second écrou et d'une seconde vis entraîneuse non représentés.

Les première et seconde roues entraîneuses 8d et 9d ont des sens de filet inverses. Le second actionneur 9 assure ainsi une conversion de la rotation de sa roue entraîneuse 9d en une translation de son piston 9a qui est inverse de la conversion assurée par le premier actionneur 8. Autrement dit, c'est lorsque les deux roues entraîneuses 8d et 9d tournent dans des sens inverses que le premier et le second piston 8a et 9a se déplacement dans le même sens axial.

Le mécanisme d'entraînement 14 comprend un module de transmission 15 et un module de réduction 16 qui transmet une rotation du moteur 13, plus précisément une rotation d'un pignon moteur 17 à denture oblique entraîné directement par le moteur, au module de transmission 15 avec une vitesse inférieure à celle de ce pignon moteur 17.

Le module de réduction 16 comprend en entrée une roue intermédiaire 18 à denture oblique suivit d'un train épicycloïdal 19, avec la roue intermédiaire 18 engrenée dans le pignon moteur 17 d'axe AX3, parallèle aux axes AX1 et AX2, pour transmettre sa rotation au train épicycloïdal 19.

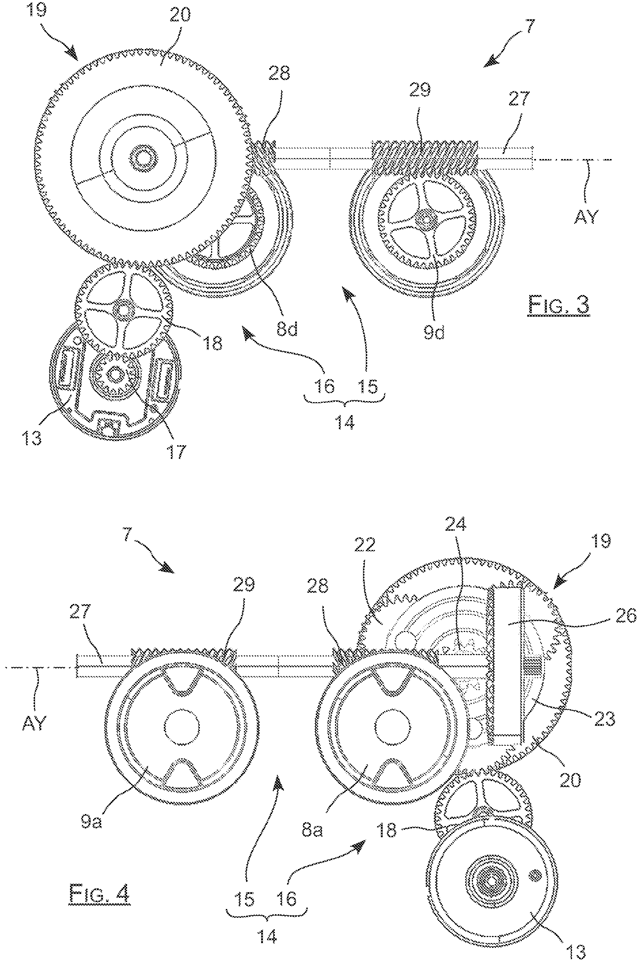

Comme visible sur la figure 4, le train épicycloïdal 19 comprend un planétaire d'entrée 20, qui est une roue dentée à denture oblique, dans lequel s'engrène la roue intermédiaire 18 pour faire tourner ce planétaire d'entrée 20 autour d'un axe AX4 parallèle à l'axe AX3. Le planétaire d'entrée 20 est prolongé suivant son axe de rotation AX4 par un pignon planétaire 21 à denture droite, ce pignon planétaire 21 engrenant trois satellites 22. Les satellites 22 sont montés pivotant autour de leur axe de révolution à un porte-satellites 23 mobile en rotation autour de l'axe AX4. Ces satellites 22 sont engrenés dans une couronne circulaire fixe qui les entoure, cette couronne n'étant pas représentée sur les figures.

Avec cet agencement, la rotation du planétaire d'entré 20 permet aux satellites 22 de tourner non seulement autour de leur propre axe mais aussi avec leur axe respectif autour de l'axe AX4, mettant en rotation le porte-satellites 23 à une vitesse de sortie très inférieure à la vitesse d'entrée.

Le porte-satellites 23 est prolongé en sortie du train épicycloïdal 19 par un pignon de sortie 24 à denture droite, visible sur la figure 4, qui dépasse du centre de la face du porte-satellites 23 opposée aux satellites 22.

Le module de transmission 15 comporte une roue dentée à renvoi d'angle 26 tournant autour d'un axe de direction longitudinale AY perpendiculaire à l'axe AX4, cette roue à renvoi d'angle 26 étant engrenée dans le pignon de sortie 24.

Cet agencement convertit la rotation du pignon 24 autour de l'axe AX4 en une rotation de la roue à renvoi d'angle 26 autour de l'axe AY qui lui est perpendiculaire, autrement appelée transmission à angle droit.

La roue à renvoi d'angle 26 présente un trou central traversant suivant l'axe AY qui est cannelé pour former une liaison glissière d'un arbre rotatif 27 dont une extrémité, qui est cannelée de manière correspondante, est engagée glissante dans ce trou. Cette liaison glissière permet à la roue à renvoi d'angle 26 d'entraîner l'arbre 27 en rotation tout en permettant à cet arbre 27 de coulisser suivant AY.

L'arbre 27 s'étend suivant l'axe AY dans un plan parallèle au plan défini par les axes AX1 et AX2 et comporte une première et une seconde vis sans fin 28 et 29 qui dépassent fixement de celui-ci, avec les deux vis sans fin 28 et 29 alignées suivant l'axe AY. La première vis sans fin 28 est engrenée dans la première roue entraîneuse 8d et la seconde vis sans fin 29 engrenée dans la seconde roue dentée entraîneuse 9d.

Cet agencement convertit la rotation de l'arbre 27 autour de l'axe AY en une rotation des première et seconde roues entraîneuses 8d et 9d autour de leurs axes respectifs AX1 et AX2, avec les vis sans fin 28 et 29 solidaires de l'arbre 27. Ces rotations sont à leur tour converties par les premier et second actionneurs mécanique 8 et 9 en translation axiale de leur piston 8a et 9a respectif.

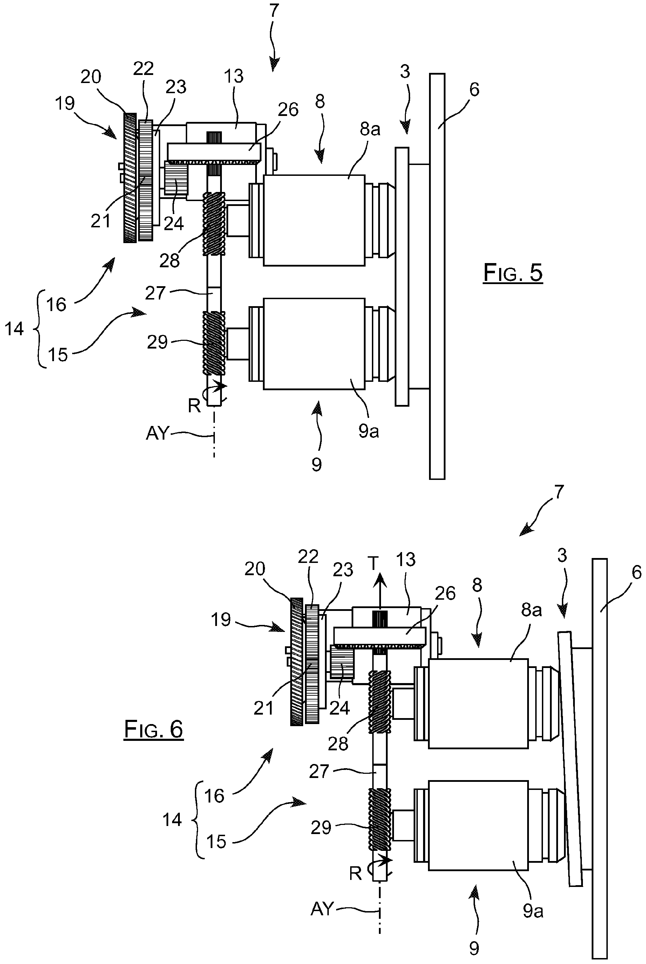

Les deux vis sans fin 28 et 29 ont des sens d'enroulement inverses de sorte qu'une rotation de l'arbre 27 dans un sens repéré par R sur la figure 5 provoque la sortie des deux pistons 8a et 9a, les actionneurs mécaniques 8 et 9 ayant des modes de fonctionnement opposés. Une rotation de l'arbre 27 dans un sens inverse au sens R provoque au contraire la rétractation des deux pistons 8a et 9a.

En situation de freinage avec une plaquette 3 d'épaisseur constante comme sur l'exemple de la figure 5, les deux portions de plaquette 3 pressées par les pistons arrivent simultanément en appui contre le disque 6 lorsque le moteur 13 est actionné.

En situation de freinage avec une plaquette 3 présentant une usure inégale comme sur la figure 6, la portion de plaquette 3 pressée ici par le premier actionneur 8 arrive en appui sur le disque de freinage 6 avant la portion pressée par le second actionneur 9. A ce stade, le premier piston 8a ainsi que la première roue entraîneuse 8d s'immobilisent, le disque de freinage 6 constituant une force d'opposition au déplacement de la portion de plaquette 3 pressée par le premier actionneur 8.

Le moteur 13 continuant d'entraîner en rotation l'arbre 27, avec les vis sans fin 28 et 29, il provoque alors la translation longitudinale de cet arbre 27 suivant AY dans un sens repéré par T. Dans ces conditions, le second piston 9a portant la portion de plaquette qui n'est pas encore en contact avec le disque 6 continue de progresser sous l'effet conjugué de la rotation de l'arbre 27 et de sa translation, attendu que les première et seconde vis sans fin 28 et 29 sont engrenées respectivement dans les première et seconde roues entraîneuses 8d et 9d, tandis que la première roue entraîneuse 8d est immobilisée.

Dès lors que la portion de plaquette associée au second actionneur 9 arrive en appui contre le disque 6, l'arbre 27 cesse de se déplacer en translation mais continue de tourner autour de son axe AY en permettant ainsi la montée en effort simultanée des plaquettes contre le disque 6. L'arbre 27 s'immobilise une fois un couple des roues entraîneuses souhaité atteint.

Un retour à l'état initial de la plaquette 3, i.e. à l'état avant freinage, est permis par une rotation de l'arbre 27 mais en sens inverse au sens R, avec le même nombre de tours que ceux réalisés pendant le freinage dans le sens R, et une translation de l'arbre dans le sens opposé de T selon la même amplitude de déplacement initial de T. La rotation inverse provoque en premier lieu la rétractation des deux pistons 8a et 9a jusqu'à ce que le piston 8a soit entièrement rétracté, puis l'arbre 27 se déplace en translation dans le sens opposé à T, tout en conservant sa rotation, jusqu'à ce que le piston 9a revienne en position initiale.

D'une manière générale, l'étrier 1 selon l'invention permet de rattraper une usure inégale de la plaquette en associant une rotation des vis sans fins avec une liaison glissière, assurant que lorsqu'une première portion de plaquette 3 arrive en appui sur le disque 6, l'autre portion de plaquette peut continuer à se déplacer jusqu'à arriver à son tour en appui contre le disque 6 avec la force désirée.

L'invention ne se limite pas au mode de réalisation décrit du module de transmission 15 et permet l'utilisation d'architectures diverses et variées dès lors que les vis sans fins sont solidaires l'une de l'autre en rotation avec la roue dentée, et mobiles en translation par rapport à celle-ci, c'est-à-dire liées à la roue par une liaison glissière.

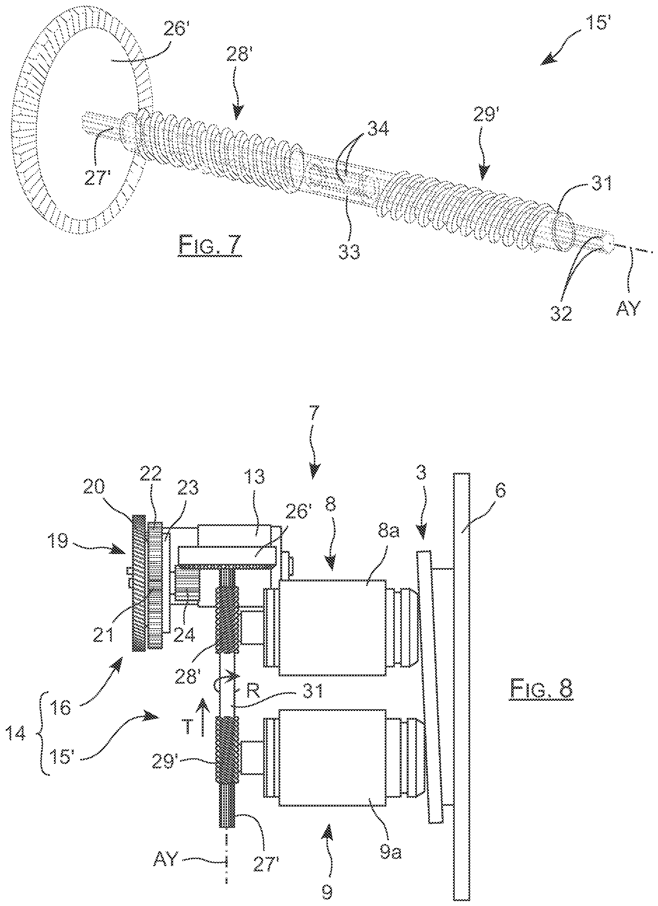

Aussi, dans la variante de la figure 7, du module de transmission repéré ici par 15', l'arbre rotatif 27' est fixe en translation en étant rigidement solidaire de la roue dentée à renvoi d'angle 26', et les vis sans fin 28' et 29' sont alignées et formées sur un manchon 31 distinct de cet arbre 27'. L'arbre 27' et le manchon 31 s'étendent longitudinalement suivant l'axe AY, avec l'arbre 27' comportant des cannelures externes 32 le long de son étendue, et le manchon 31 entourant cet arbre 27' et les cannelures externes 32. Le module de transmission 15' comprend en outre un moyeu 33 s'étendant entre l'arbre 27' et le manchon 31 en étant lié rigidement au manchon 31 dans sa région centrale, c'est-à-dire entre les vis sans fin 28' et 29'.

Le moyeu 33 est pourvu de cannelures internes 34 qui s'engagent dans les cannelures externes 32. L'arbre 27' et le manchon 31, par l'intermédiaire du moyeu 33, sont ainsi couplés en rotation tout en laissant au manchon 31 qui porte les vis 28' et 29', un degré de liberté en translation suivant l'axe AY par rapport à l'arbre 27'.

Avec cet arrangement, en situation de freinage illustrée à la figure 8 avec un étrier 1 pourvu du module de transmission 15' et d'une plaquette 3 présentant un faciès d'usure identique à celui représenté à la figure 6, c'est le manchon 31 qui se déplace dans le sens repéré par T, avec le moyeu 33 glissant sur l'arbre 27' durant leur rotation repérée par R quand la première roue entraîneuse 8d s'immobilise.

Un retour à l'état initial de la plaquette 3 est permis par une rotation de l'ensemble formé par l'arbre 27', le moyeu 33 et le manchon 31 mais en sens inverse au sens repéré par R, avec le même nombre de tours que ceux réalisés pendant le freinage dans le sens R. La rotation inverse provoque en premier lieu la rétractation des deux pistons 8a et 9a jusqu'à ce que le piston 8a soit entièrement rétracté, puis le manchon 31 se déplace en translation dans le sens opposé à T, tout en conservant sa rotation, jusqu'à ce que le piston 9a revienne en position initiale.

Dans l'exemple des figures 6 et 8, la portion de plaquette pressée par le premier actionneur 8 présente une garniture d'épaisseur inférieure à celle de la portion de plaquette pressée par le second actionneur 9, mais il est à noter que l'invention n'apporte pas seulement une solution pour compenser ce faciès particulier d'usure.

En effet à l'inverse, dans le cas où la portion de plaquette pressée par le premier actionneur 8 présente une garniture d'épaisseur cette fois supérieure à celle de la portion de plaquette pressée par le second actionneur 9, les vis sans fins 28 et 29 ou 28' et 29' se déplacent dans le sens opposé à T lors d'une commande de freinage.

Il est à noter également, que l'invention pourrait prévoir de s'affranchir du moyeu 33, avec les cannelures internes 34 dépassant directement du manchon 31 pour s'engrener dans les cannelures externe 32 de l'arbre 27', limitant ainsi le nombre de composants du module de transmission 15' et simplifiant son assemblage.

En outre, les cannelures internes 34 ne sont pas nécessairement formées en région centrale du manchon 31, dès lors qu'elles respectent toujours la condition fonctionnelle d'être engrenées dans les cannelures externes 32 quel que soit l'état d'usure de la garniture 3b. L'invention pourrait notamment prévoir que les cannelures externes 32 ne s'étendent pas sur toute l'étendue de l'arbre 27', attendu que le déplacement maximum du manchon 31 par rapport à l'arbre 27' est borné par les deux cas pour lesquels une des portions de garniture 3b est seine tandis que l'autre portion est complètement consommée.

Dans l'ensemble des figures, les arbres 27 et 27' sont situés « au-dessus » des première et seconde roues entraîneuses 8d et 9d, avec l'axe AX1 situé entre les axes AX3 et AX4. Mais il est à noter que l'invention pourrait prévoir l'arbre 27 ou 27' situé « au-dessous » des roues entraîneuses 8d et 9d, autrement dit avec l'axe AX4 plus proche de l'axe de rotation du disque de freinage 6 que ne l'est AX1, pour respecter un encombrement différent.

Dans la description ci-dessus, le fonctionnement du frein selon l'invention a été expliqué en termes de déplacement de ses composants afin d'en faciliter la compréhension. En pratique, dans le cas d'un freinage avec un tel actionneur les déplacements sont infimes et ce mécanisme convertit un couple exercé par le moteur 13 en un effort presseur exercé par chacun des pistons 8a et 9a sur la plaquette 3.

### NOMENCLATURE

| | |
|---|---|
| 1 étrier | 17 pignon moteur |
| 2 corps d'étrier | 18 roue intermédiaire |
| 3 plaquette | 19 train épicycloïdal |
| 3a support de plaquette | 20 planétaire d'entré |
| 3b garniture de plaquette | 21 pignon planétaire |
| 4 plaquette | 22 satellites |
| 4a support de plaquette | 23 porte-satellites |
| 4b garniture de plaquette | 24 pignon de sortie |
| 6 disque de freinage | 26 roue dentée à renvoi d'angle |
| 7 actionneur électromécanique | 27 ; 27' arbre rotatif |
| 8 premier actionneur mécanique | 28 ; 28' première vis sans fin |
| 8a premier piston | 29 ; 29' seconde vis sans fin |
| 8b premier écrou | 31 manchon |
| 8c première vis entraîneuse | 32 cannelures externes |
| 8d première roue entraîneuse | 33 moyeu |
| 9 second actionneur mécanique | 34 cannelures internes |
| 9a second piston | AX1 axe de translation du premier piston 8a et de |
| 9d seconde roue entraîneuse | rotation de la première roue entraîneuse 8d |
| 11 première cavité | AX2 axe de translation du second piston 9a et de |
| 13 moteur électrique | rotation de la seconde roue entraîneuse 9d |
| 14 mécanisme d'entraînement | AX3 axe de rotation du pignon moteur 17 |
| 15/15' module de transmission | AX4 axe de rotation du planétaire d'entré 20 |
| 16 module de réduction | AY axe longitudinal de rotation des vis sans fins |

## Revendications

1. Etrier (1) de frein destiné à chevaucher un disque de freinage (6), qui comprend un jeu de plaquettes (3,4) et un actionneur électromécanique (7) pour presser une plaquette (3) contre une face du disque (6), **caractérisé en ce que** l'actionneur électromécanique (7) comprend :
- un moteur électrique (13) entraînant un premier actionneur mécanique (8) et un second actionneur mécanique (9) ;
- le premier actionneur mécanique (8) incluant une première roue entraîneuse dentée (8d) et un premier piston (8a) pour presser une première portion de la plaquette (3) ;
- le second actionneur mécanique (9) incluant une seconde roue entraîneuse dentée (9d) et un second piston mobile (9a) pour presser une seconde portion de la plaquette ;
- chaque actionneur (8 ; 9) convertissant une rotation de sa roue entraîneuse (8d ; 9d) en une translation de son piston (8a ; 9a), le premier et le second actionneur ayant des sens de conversion inverses ;
- un module de transmission (15 ; 15') comprenant :
- une première vis sans fin (28 ; 28') et une seconde vis sans fin (29; 29') de même direction longitudinale (AY) et ayant des sens d'enroulement inverses tout en étant rigidement solidaires l'une de l'autre, ces première et seconde vis sans fin (28, 29 ; 28', 29') étant engrenées respectivement avec la première et la seconde roue entraîneuses (8d, 9d) pour les faire tourner simultanément en sens inverses ;
- des moyens d'entraînement en rotation des première et seconde vis sans fin (28, 29 ; 28', 29') par le moteur électrique (13), ces moyens formant une liaison glissière permettant à la première et la seconde vis sans fin (28, 29 ; 28', 29') de se déplacer en translation suivant la direction longitudinale (AY).

2. Etrier selon la revendication 1, dans lequel les moyens formant liaison glissière et d'entraînement en rotation des vis sans fin (28, 29) du module de transmission (15) comportent :
- un arbre rotatif (27) portant rigidement les première et seconde vis sans fin (28, 29), cet arbre étant mobile en translation suivant la direction longitudinale (AY) ;
- une roue dentée (26) fixe en translation et mise en rotation par le moteur électrique (13), cette roue dentée comprenant un trou traversant cannelé dans lequel une extrémité cannelée de l'arbre (27) est engagée.

3. Etrier selon la revendication 1, dans lequel les moyens formant liaison glissière et d'entraînement en rotation des vis sans fin (28', 29') du module de transmission (15') comportent :
- un manchon (31) portant rigidement les première et seconde vis sans fin (28', 29'), ce manchon (31) étant mobile en translation suivant la direction longitudinale (AY) ;
- une roue dentée (26') fixe en translation et mise en rotation par le moteur électrique (13) ;
- un arbre rotatif (27) qui est solidaire rigidement et dépasse de la roue dentée en comportant des cannelures externes (32), cet arbre rotatif (27) s'étendant suivant la direction longitudinale (AY) en étant entouré du manchon (31) ;
- des cannelures internes (34) portées par le manchon (31) avec lesquelles les cannelures externes (32) s'engrènent par complémentarité de forme.

4. Etrier selon la revendication 3, dans lequel les cannelures internes (34) dépassent d'un moyeu (33) lié rigidement au manchon (31).

5. Etrier selon l'une des revendications 1 à 4, dans lequel la première et la seconde roue entraîneuse (8d, 9d) sont à denture oblique et tournent autour d'axes parallèles l'un à l'autre et perpendiculaires à la direction longitudinale (AY).

6. Etrier selon l'une des revendications précédentes, comprenant un module de réduction (16) qui transmet la rotation du moteur (13) au moyens d'entraînement en rotation des première et seconde vis sans fin (28 ; 29/28' ; 29').

7. Frein à disque, comprenant un étrier (1) selon l'une des revendications précédentes.

## Patentansprüche

1. Bremssattel (1) zum Umgreifen einer Bremsscheibe (6), der einen Satz Beläge (3, 4) und ein elektromechanisches Stellglied (7) umfasst, um einen Belag (3) gegen eine Seite der Scheibe (6) zu pressen, **dadurch gekennzeichnet, dass** das elektromechanische Stellglied (7) umfasst:
- einen Elektromotor (13), der ein erstes mechanisches Stellglied (8) und ein zweites mechanisches Stellglied (9) antreibt;
- wobei das erste mechanische Stellglied (8) ein erstes Antriebszahnrad (8d) und einen ersten Kolben (8a) beinhaltet, um einen ersten Abschnitt des Belags (3) anzupressen;
- wobei das zweite mechanische Stellglied (9) ein zweites Antriebszahnrad (9d) und einen zweiten beweglichen Kolben (9a) beinhaltet, um einen zweiten Abschnitt des Belags anzupressen;
- wobei jedes Stellglied (8; 9) eine Drehung seines Antriebsrads (8d; 9d) in eine Translation seines Kolbens (8a; 9a) umwandelt, wobei das erste und das zweite Stellglied gegensinnige Umwandlungsrichtungen aufweisen;
- ein Übertragungsmodul (15; 15'), umfassend:
- eine erste Schnecke (28; 28') und eine zweite Schnecke (29; 29') mit derselben Längsrichtung (AY) und mit gegensinnigen Gangrichtungen, die zudem starr miteinander verbunden sind, wobei diese erste und zweite Schnecke (28, 29; 28', 29') mit dem ersten beziehungsweise zweiten Antriebsrad (8d, 9d) in Eingriff stehen, um sie gleichzeitig gegensinnig drehen zu lassen;
- Drehantriebseinrichtungen der ersten und zweiten Schnecke (28, 29; 28', 29') durch den Elektromotor (13), wobei diese Einrichtungen eine Gleitverbindung bilden, die es der ersten und zweiten Schnecke (28, 29; 28', 29') ermöglicht, sich translatorisch entlang der Längsrichtung (AY) zu bewegen.

2. Bremssattel nach Anspruch 1, bei dem die eine Gleitverbindung bildenden Drehantriebseinrichtungen der Schnecken (28, 29) des Übertragungsmoduls (15) beinhalten:
- eine drehende Welle (27), die starr die erste und zweite Schnecke (28, 29) trägt, wobei diese Welle translatorisch entlang der Längsrichtung (AY) beweglich ist;
- ein Zahnrad (26), das translatorisch feststeht und vom Elektromotor (13) in Drehung versetzt wird, wobei dieses Zahnrad ein keilgenutetes Durchgangsloch umfasst, in das ein keilgenutetes Ende der Welle (27) eingesetzt ist.

3. Bremssattel nach Anspruch 1, bei dem die eine Gleitverbindung bildenden Drehantriebseinrichtungen der Schnecken (28', 29') des Übertragungsmoduls (15') beinhalten:
- eine Hülse (31), die starr die erste und zweite Schnecke (28', 29') trägt, wobei diese Hülse (31) translatorisch entlang der Längsrichtung (AY) beweglich ist;
- ein Zahnrad (26'), das translatorisch feststeht und vom Elektromotor (13) in Drehung versetzt wird;
- eine drehende Welle (27), die starr mit dem Zahnrad verbunden ist und es überragt, wobei sie äußere Keilnuten (32) beinhaltet, wobei sich diese rotierende Welle (27) entlang der Längsrichtung (AY) erstreckt und von der Hülse (31) umgeben ist;
- innere Keilnuten (34), die von der Hülse (31) getragen werden, mit denen die äußeren Keilnuten (32) formschlüssig in Eingriff stehen.

4. Bremssattel nach Anspruch 3, bei dem die inneren Keilnuten (34) eine starr mit der Hülse (31) verbundene Nabe (33) überragen.

5. Bremssattel nach einem der Ansprüche 1 bis 4, bei dem das erste und zweite Antriebsrad (8d, 9d) schrägverzahnt sind und um parallel zueinander und senkrecht zur Längsrichtung (AY) verlaufende Achsen drehen.

6. Bremssattel nach einem der vorhergehenden Ansprüche, umfassend ein Getriebemodul (16), das die Drehung des Motors (13) an die Drehantriebseinrichtungen der ersten und zweiten Schnecke (28; 29/28'; 29') überträgt.

7. Scheibenbremse mit einem Bremssattel (1) nach einem der vorhergehenden Ansprüche.

## Claims

1. A brake caliper (1) for overlapping a brake disc (6), which comprises a set of pads (3, 4) and an electromechanical actuator (7) for pressing a pad (3) against a face of the disc (6), **characterised in that** the electromechanical actuator (7) comprises:
- an electric motor (13) driving a first mechanical actuator (8) and a second mechanical actuator (9);
- the first mechanical actuator (8) including a first drive gear (8d) and a first piston (8a) for pressing a first portion of the pad (3);
- the second mechanical actuator (9) including a second drive gear (9d) and a second movable piston (9a) for pressing a second portion of the pad;
- each actuator (8; 9) converting a rotation of its drive gear (8d; 9d) into a translation of its piston (8a; 9a), the first and second actuator having reverse conversion senses;
- a transmission module (15; 15') comprising:
- a first worm screw (28; 28') and a second worm screw (29; 29') having a same longitudinal direction (AY) and having reverse winding senses while being rigidly integral with each other, these first and second worm screws (28, 29; 28', 29') being meshed with the first and second drive gears (8d, 9d) respectively to simultaneously rotate them in reverse senses;
- means for rotatably driving the first and second worm screws (28, 29; 28', 29') by the electric motor (13), these means forming a slide connection enabling the first and the second worms (28, 29; 28', 29') to translationally move along the longitudinal direction (AY).

2. The caliper according to claim 1, wherein the means forming a slide connection and for rotatably driving the worm screws (28, 29) of the transmission module (15) include:
- a rotary shaft (27) rigidly carrying the first and second worm screws (28, 29), this shaft being translationally movable along the longitudinal direction (AY);
- a translationally fixed gear (26) rotated by the electric motor (13), this gear comprising a splined through hole in which a splined end of the shaft (27) is engaged.

3. The caliper according to claim 1, wherein the means forming a slide connection and for rotatably driving the worm screws (28', 29') of the transmission module (15') include:
- a sleeve (31) rigidly carrying the first and second worm screws (28', 29'), this sleeve (31) being translationally movable along the longitudinal direction (AY);
- a translationally fixed gear (26') rotated by the electric motor (13);
- a rotary shaft (27) which is rigidly integral with and project from the gear by including external splines (32), this rotary shaft (27) extending along the longitudinal direction (AY) by being surrounded by the sleeve (31);
- internal splines (34) carried by the sleeve (31) with which the external splines (32) mesh by form fitting.

4. The caliper according to claim 3, wherein the internal splines (34) project from a hub (33) rigidly connected to the sleeve (31).

5. The caliper according to one of claims 1 to 4, wherein the first and second drive gears (8d, 9d) have oblique teeth and rotate about axes parallel to each other and perpendicular to the longitudinal direction (AY).

6. The caliper according to one of the preceding claims, comprising a reduction module (16) which transmits rotation of the motor (13) to the means for rotatably driving the first and second worm screws (28; 29 / 28'; 29').

7. A disc brake, comprising a caliper (1) according to one of the preceding claims.
